# EUROPÄISCHE PATENTANMELDUNG

(11) **EP 4 175 137 A1**
(43) Veröffentlichungstag der Anmeldung: **03.05.2023**
(21) Anmeldenummer: 21205048.8
(22) Anmeldetag: 27.10.2021
(51) Int. Cl.: H02K 15/00, H02K 17/16

(54) **ROTOR FÜR EINE DYNAMOELEKTRISCHE ROTATORISCHE MASCHINE**

(71) Anmelder: Siemens Aktiengesellschaft, 80333 München (DE)
(72) Erfinder: Knauff, Axel, 97702 Münnerstadt (DE); Schmidt, Johannes, 97218 Gerbrunn (DE)
(74) Vertreter: Siemens Patent Attorneys

(57) **Zusammenfassung**

Die Erfindung betrifft einen Rotor (21) für eine dynamoelektrische rotatorische Maschine (23), insbesondere Asynchronmaschine, mit einem Rotorpaket (24) und einem Kurzschlusskäfig, wobei der Kurzschlusskäfig eine Mehrzahl an elektrisch leitfähigen Käfigstäben (3) und elektrisch leitfähigen Kurzschlussringen (2) aufweist, wobei die Käfigstäbe (3) in Nuten des Rotorpakets (24) angeordnet sind, wobei die Käfigstäbe (3) mit wenigstens einen Kurzschlussring (2) verbunden sind, wobei die Käfigstäbe (3) einen ausgeklinkten Bereich (311) aufweisen.

## Beschreibung

Hohe mechanische Spannungen, beispielsweise durch Kerbwirkung sowie eine damit hergehende Materialermüdung, treten häufig bei Rotoren für Asynchronmaschinen auf.

Häufig sind hierbei diejenigen Stellen eines Kurzschlusskäfigs betroffen, bei welchen die Käfigstäbe in Öffnungen des Kurzschlussrings greifen.

Durch Drehzahlbegrenzung kann die Materialermüdung verzögert werden. Dies schränkt jedoch Anwendungsgebiete stark ein.

Der Erfindung liegt die Aufgabe zugrunde, mechanische Spannungen zu verringern bzw. zu vermeiden.

Die Lösung der Aufgabe gelingt durch Anspruch 1, d.h. einen Rotor für eine dynamoelektrische rotatorische Maschine, insbesondere Asynchronmaschine, mit einem Rotorpaket und einem Kurzschlusskäfig, wobei der Kurzschlusskäfig eine Mehrzahl an elektrisch leitfähigen Käfigstäben und elektrisch leitfähigen Kurzschlussringen aufweist, wobei die Käfigstäbe in Nuten des Rotorpakets angeordnet sind, wobei die Käfigstäbe mit wenigstens einen Kurzschlussring verbunden sind, wobei die Käfigstäbe einen ausgeklinkten Bereich aufweisen.

Vorteilhaft ist ein Kurzschlussring an einem vorderen axialen Ende als auch an einem hinteren axialen Ende des Rotorpakets angebracht.

Die Erfindung eignet sich besonders gut für Rotoren, bei welchen Käfigstäbe und Kurzschlussring durch Laser-Schweißen und/oder durch Elektronenstrahl-Schweißen verbunden werden. Hierbei wird der Kurzschlussring mit den Käfigstäben, vorzugsweise radial von außen, verschweißt. Jedoch eignen sich für die Verbindung von Käfigstab und Kurzschlussring auch andere Verfahren, die eine stoffschlüssige Verbindung ermöglichen.

Vorteilhaft ist eine Ausführung, wonach der ausgeklinkte Bereich in einer Öffnung des Kurzschlussrings liegt. Somit kann ein Nutgrunddurchmesser im Kurzschlussring erhöht werden.

Radial betrachtet kann der Kurzschlussring mehr Material aufweisen und somit stabiler sein. Es treten weniger Spannungen auf.

Durch die beschriebene Ausführung reduzieren sich mechanische Spannungen, insbesondere im Kurzschlussring, deutlich.

Vorteilhaft ist eine Ausführung, wonach ein Übergang vom ausgeklinkten Bereich zu einem anderen Bereich des Käfigstabs eine Rundung aufweist.

Dies hat den Vorteil, dass eine Spannungsbelastung des Käfigstabs geringgehalten wird.

Besonders vorteilhaft ist hierbei eine Ausführung, wonach ein Übergang vom ausgeklinkten Bereich zum anderen Bereich bogenförmig oder kreissegmentförmig ist.

Auch eine Kombination mehrerer Formen ist denkbar.

Eine bogenförmige oder kreissegmentförmige Ausführung gewährleistet eine gleichmäßige Spannungsverteilung, insbesondere im Bereich dieses Übergangs.

Vorteilhaft ist zudem eine Ausführung, wonach ein Ende des ausgeklinkten Bereichs in einer Ebene mit einem Ende des Kurzschlussrings liegt.

So kann beispielsweise, in Radialrichtung betrachtet, der ausgeklinkte Bereich einen geringeren Durchmesser als der restliche Bereich des Käfigstabs aufweisen.

Vorteilhaft ist eine Ausführungsform, wonach der Übergang im Bereich des Rotorpakets liegt.

Der ausgeklinkte Bereich kann auch als Bereich mit Ausklinkung bezeichnet werden.

Der Begriff Ausklinkung bezeichnet ein örtliches Entfernen von Querschnittsteilen eines Bauteils. Ausklinkung kann jedoch auch ein von Anfang an nicht Vorhandensein von äußeren Querschnittsteilen des Bauteils bedeuten.

Dies wird in den Figuren genauer gezeigt.

Die Erfindung bietet den Vorteil, dass keine Drehzahlbegrenzung nötig ist. Es können hohe Drehzahlen erreicht werden.

Die mechanischen Spannungen im Kurzschlussring, insbesondere in Öffnungen des Kurzschlussrings, können deutlich reduziert werden, eine Kerbwirkung wird vermindert. Der Rotor ist für viele Lastspiele, die über 100.000 Zyklen hinausgehen, geeignet, da keine Materialermüdung und auch kein Brechen einer Anschlussstelle zwischen Käfigstab und Kurzschlussring zu befürchten ist.

Eine Betriebsfestigkeit des Rotors kann dadurch gewährleistet werden, da eine Reduktion der mechanischen Spannungen, insbesondere im Kurzschlussring, insbesondere im Nutgrund, reduziert wird.

Die Lösung der Aufgabe gelingt ferner durch ein Verfahren zur Herstellung eines Rotors mit folgenden Schritten:
- Bereitstellen des Rotorpakets,
- Einfügen von Käfigstäben in die axial verlaufenden Öffnungen des Rotorpakets,
- Anbringen wenigstens einer Kurzschlussringscheibe auf aus dem Rotorpaket herausragende Käfigstäbe,
- stoffschlüssiges Verbinden, insbesondere mittels Schweißens der Kurzschlussringscheibe mit den Käfigstäben oder
- Anbringen wenigstens einer weiteren Kurzschlussringscheibe und stoffschlüssiges Verbinden, insbesondere mittels Schweißens der Kurzschlussringscheibe miteinander und mit den Käfigstäben.

Das Verfahren wird in der Figurenbeschreibung näher erläutert.

Die Lösung der Aufgabe gelingt ferner durch einen Käfigstab für einen Rotor sowie durch eine dynamoelektrische rotatorische Maschine, aufweisend einen derartigen Rotor.

Die beschriebenen Käfigstäbe mit dem ausgeklinkten Bereich eignen sich besonders gut für einen Kurzschlussring, der eine Mehrzahl an axial verlaufenden Öffnungen aufweist, wobei die Öffnungen wenigstens im Wesentlichen ringsum um einen Mittelpunkt angeordnet sind, wobei wenigstens ein radiales Ende der Öffnung einen elliptisch geformten Abschnitt aufweist.

Der elliptisch geformte Abschnitt weist vorteilhaft ein Ellipsenverhältnis von Höhe zu Breite auf, welches zwischen 0,2:1 und 0,6:1 liegt.

Zusätzlich kann der Kurzschlussring, benachbart zum elliptischen Abschnitt, wenigstens einen kreisförmigen Abschnitt aufweisen.

Der kreisförmige Abschnitt weist Vorteile hinsichtlich einer Fertigung auf, da beispielsweise mittels eines Fräsers die Öffnungen im Kurzschlussring ausgebildet werden und der kreisförmige Abschnitt einen Radius aufweist, welcher vorteilhaft einem Radius eines Fräswerkzeugs gleicht.

Der Kurzschlussring kann mehrere Kurzschlussringscheiben aufweisen.

Vorzugsweise werden die Kurzschlussringscheiben miteinander stoffschlüssig verbunden. Das stoffschlüssige Verbinden wird, z. B. mittels Schweißens, vorteilhaft dann durchgeführt, wenn auch die Käfigstäbe in den Öffnungen vorhanden sind, sodass eine stoffschlüssige Verbindung von Kurzschlussringscheiben untereinander wie auch mit den Käfigstäben erreicht werden.

Im Folgenden wird die Erfindung anhand der in den Figuren dargestellten Ausführungsbeispiele näher beschreiben und erläutert. Es zeigen:
- FIG 1: einen Schnitt entlang einer Rotationsachse durch einen Rotor einer elektrischen Maschine,
- FIG 2: Abbildung mechanischer Spannungen aus FIG 1,
- FIG 3: einen Schnitt entlang einer Rotationsachse durch einen Rotor einer dynamoelektrischen rotatorischen Maschine,
- FIG 4: Abbildung mechanischer Spannungen aus FIG 3,
- FIG 5: den Rotor mit Öffnungen,
- FIG 6: die in FIG 5 offenbarte Öffnung im Detail.
- FIG 7: den Rotor,
- FIG 8: die dynamoelektrische rotatorische Maschine
- FIG 9: ein Verfahren zur Herstellung des Rotors.

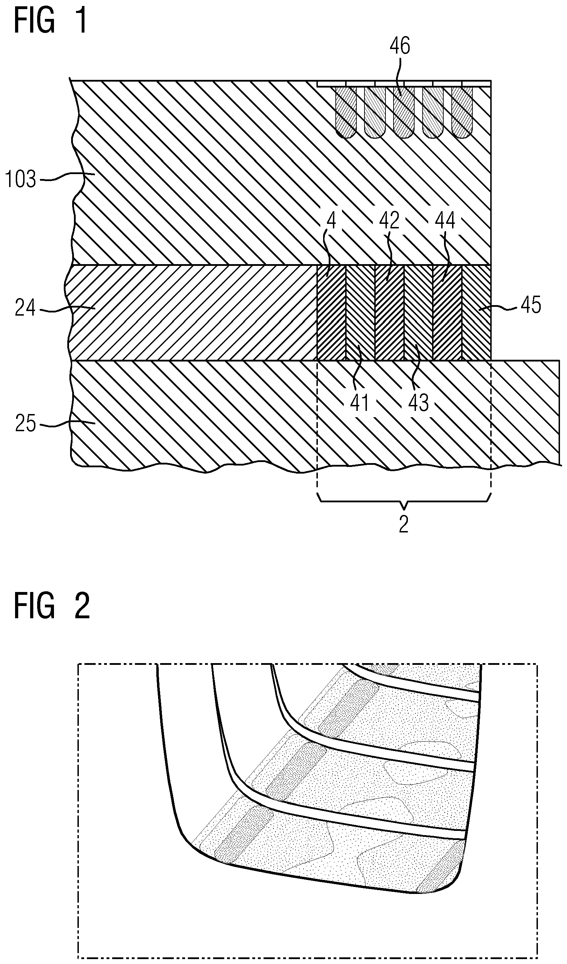

FIG 1 zeigt einen Schnitt entlang einer Rotationsachse durch einen Rotor einer elektrischen Maschine.

Die Figur zeigt einen Käfigstab 103, ein Blechpaket 24 sowie eine Welle 25.

Der Käfigstab 103 ist in der Figur mittels Schweißnähten 46 mit Kurzschlussringscheiben 4, 41, 42, 43, 44, 45 verbunden.

Die Kurzschlussringscheiben 4, ...,45 bilden in der Figur einen Kurzschlussring 2.

Vorteilhaft weist ein Rotor eine Mehrzahl an Käfigstäben 103 auf, wobei die Käfigstäbe 103 mit dem Kurzschlussring 2 einen Kurzschlusskäfig bilden.

In FIG 2 ist erkennbar, dass durch die in Figur 1 gezeigte Ausführung mechanische Spannungen, insbesondere im Kurzschlussring 2, entstehen.

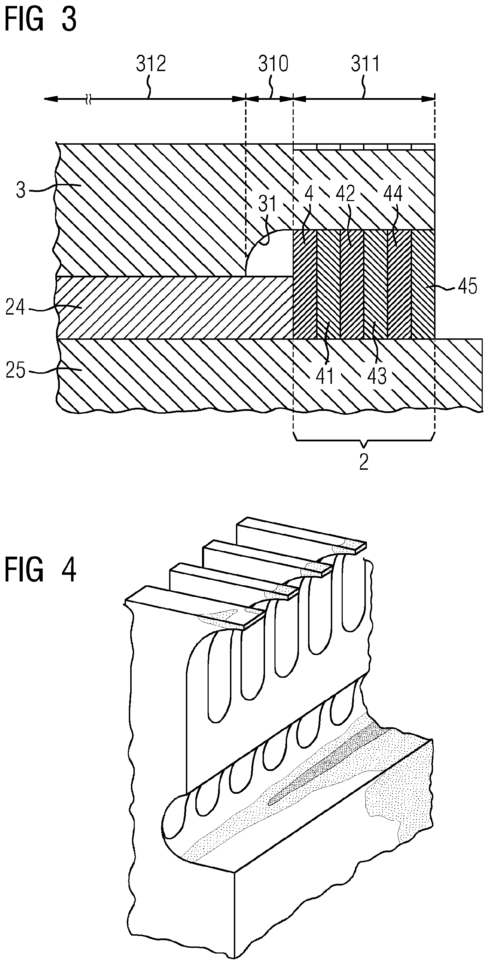

Es wird daher die in FIG 3 gezeigte Ausführung vorgeschlagen.

FIG 3 zeigt einen Schnitt entlang einer Rotationsachse durch einen Rotor einer dynamoelektrischen rotatorischen Maschine.

Die Figur zeigt eine Welle 25 sowie ein Blechpaket 24. Die Figur zeigt zudem einen Käfigstab 3 mit einem ausgeklinkten Bereich 311, einem Übergangsbereich 310 sowie einen weiteren Bereich 312, welcher vorteilhaft innerhalb des Blechpakets 24 liegt.

Der ausgeklinkte Bereich 311 (kann auch Bereich mit einer Ausklinkung genannt werden) liegt in der Figur in einer Öffnung des Kurzschlussrings 2, wobei der Kurzschlussring 2 auch in dieser Figur durch eine Mehrzahl an Kurzschlussringscheiben 4, ...,45 gebildet wird.

Der Kurzschlusskäfig, also eine Mehrzahl an elektrisch leitfähigen Käfigstäben 3 und wenigstens ein elektrisch leitfähiger Kurzschlussring 2, vorzugsweise zwei elektrisch leitfähige Kurzschlussringe 2, sind vorteilhaft Teil einer Asynchronmaschine.

Vorteilhaft weisen alle Käfigstäbe 3 einen ausgeklinkten Bereich 311 auf.

Auch in dieser Ausführung wird eine elektrische bzw. mechanische Verbindung von Kurzschlussringscheiben 4, ...,45 mit dem Käfigstab 3 durch ein stoffschlüssiges Verbinden, insbesondere Schweißen, erreicht.

Die in FIG 3 gezeigte Ausführungsform bietet viele Vorteile, beispielsweise zeigt sich in FIG 4, dass kaum mechanische Spannungen, insbesondere im Bereich von Öffnungen der Kurzschlussringscheiben 4, ...,45 auftreten.

Die mechanischen Spannungen und Belastungen sind in FIG 2 und FIG 4 durch die dunklen Schattierungen erkennbar. Je dunkler die Schattierung, desto höher ist die mechanische Spannung an dieser Stelle.

Derartig ausgeführte dynamoelektrische rotatorische Maschinen können hohe Drehzahlen bewerkstelligen, ohne dass Materialermüdungen zu befürchten sind.

Der in FIG 3 gezeigte Übergangsbereich 310 weist vorteilhaft eine Rundung auf, so kann eine Spannungsbelastung des Käfigstabs 3 in diesem Bereich gering gehalten werden.

Vorteilhaft ist ein bogenförmiger Übergang oder ein kreissegmentförmiger Übergang. Die Figur zeigt auch, dass das Ende des ausgeklinkten Bereichs 311 in einer Ebene mit einem Ende des Kurzschlussrings 2 liegt.

Die Kurzschlussringscheiben 4, ...,45 sind untereinander wenigstens teilweise miteinander stoffschlüssig verbunden.

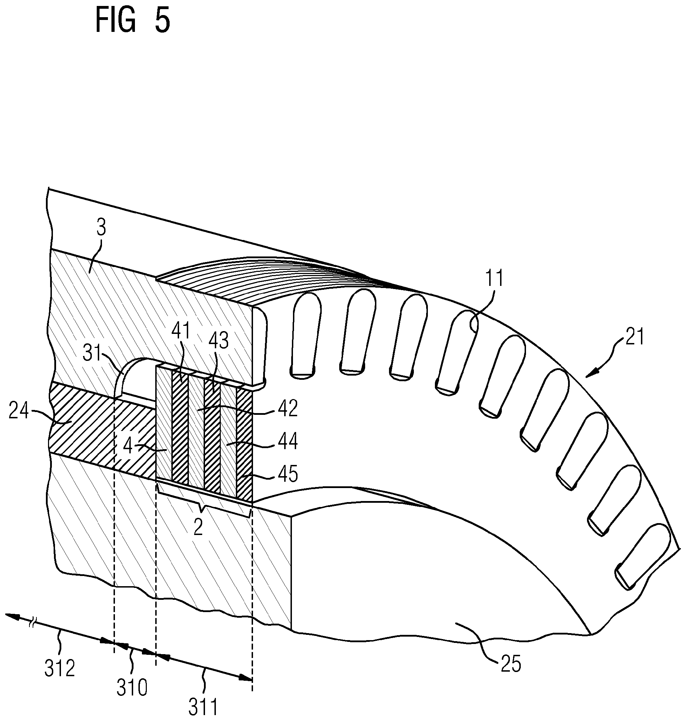

FIG 5 zeigt den Rotor 21 in einer Ansicht, in welcher ein Schnitt durch den Käfigstab 3 und auch durch eine Öffnung 11 des Kurschlussrings bzw. der einzelnen Kurschlussringscheiben erfolgt ist.

Der Kurschlussring 2 ist in der Figur rein beispielhaft aus sechs Kurzschlussringscheiben 4, ...,45 gebildet.

Die Käfigstäbe 3 sind in einem Rotorpaket 24 angeordnet und ragen aus diesem heraus.

Die Käfigstäbe 3 sind vorteilhaft vorgefertigte Käfigstäbe.

Durch stoffschlüssiges Verbinden, insbesondere mittels Schweißens, der Kurzschlussringscheiben 4, ...,45 mit den Käfigstäben 3 bzw. durch stoffschlüssiges Verbinden, insbesondere mittels Schweißens, mehrerer Kurzschlussringscheiben 4, ...,45 miteinander und mit den Käfigstäben 3 gelingt eine stabile Verbindung, die hohen Drehzahlen standhalten kann.

Die Kurzschlussringscheiben 4, ...,45 können Formabweichungen aufweisen, beispielsweise zur Bildung einer Mulde damit Schweißmaterial eingebracht werden kann.

Der Kurzschlussring 2 liegt in der Figur auf der Welle 25 auf.

Die Figur zeigt, dass der Kurzschlussring eine Mehrzahl an axial verlaufenden Öffnungen 11 aufweist.

Diese Öffnungen 11 sind wenigstens im Wesentlichen vorteilhaft ringsum um einen Mittelpunkt M angeordnet und weisen einen elliptisch geformten Abschnitt auf.

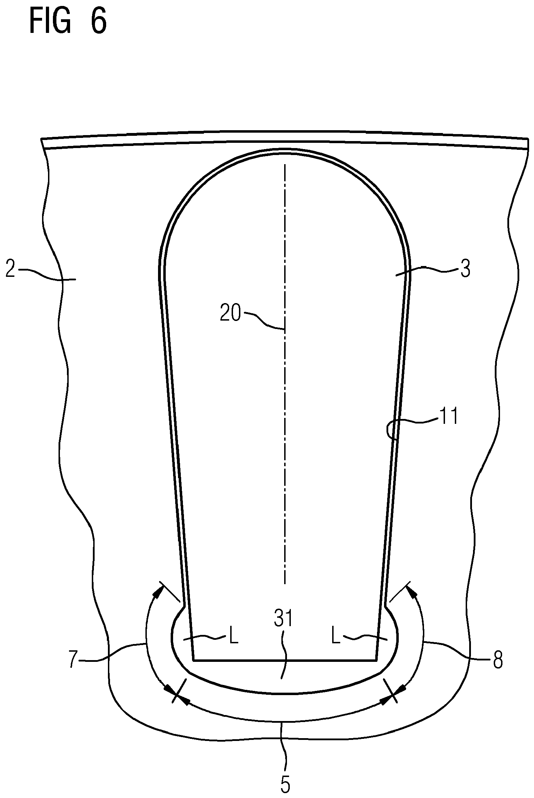

Dies wird in FIG 6 näher erläutert. Auch das Rotorpaket 24, welches vorteilhaft als Blechpaket ausgebildet ist, weist eine Mehrzahl an axial verlaufenden Öffnungen auf, wobei die Öffnungen wenigstens im Wesentlichen rings um einen Mittelpunkt M angeordnet sind.

FIG 6 zeigt die in FIG 5 offenbarte Öffnung 11 im Detail.

Die Öffnung 11 weist wenigstens einen elliptischen Abschnitt 5 auf.

Der elliptische Abschnitt 5 ist vorteilhaft an einer in Richtung des Mittelpunkts M weisenden Öffnung 11 ausgebildet.

In der Figur ist eine Ausführungsform gezeigt, in welcher zusätzlich zum elliptischen Abschnitt noch benachbarte kreisförmige Abschnitte 7 bzw. 8 ausgebildet sind.

Aus dieser Frontalansicht ist zu erkennen, dass ein Käfigstab 3 nicht die gesamte Öffnung 11 ausfüllt.

Da die Öffnung nicht durch den Käfigstab 3 ausgefüllt wird, befindet sich beispielsweise Luft L in den nicht ausgefüllten Bereichen.

Die Ausklinkung weist in der Figur eine Ausklinkungsfläche 31 auf.

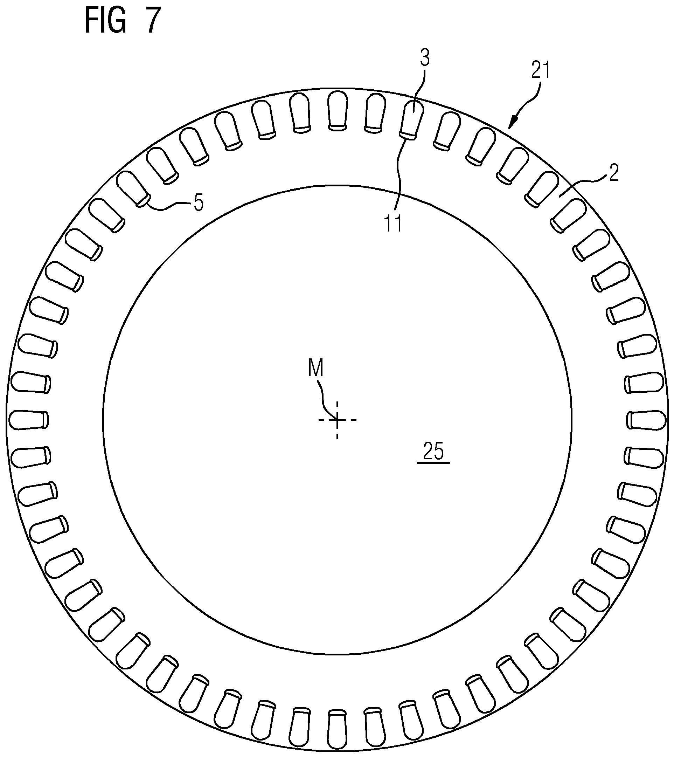

FIG 7 zeigt den Rotor 21 in Frontalansicht.

Der Rotor 21 weist eine Mehrzahl an Öffnungen 11 auf.

Die Figur zeigt zudem den Kurzschlussring 2 sowie die Welle 25.

Die Öffnungen 11 verlaufen vorzugsweise axial, eine Rotationsachse des Rotors 21 betreffend, wie bereits in FIG 5 dargestellt.

Die Öffnungen 11 sind in der Figur ringsum um einen Mittelpunkt M angeordnet, wobei wenigstens ein radiales Ende der Öffnung 11 einen elliptisch geformten Abschnitt 5 aufweist.

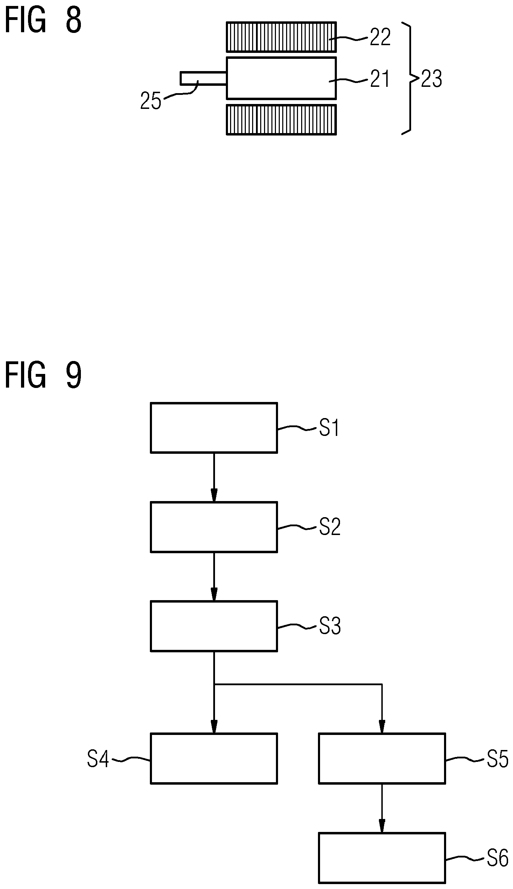

FIG 8 zeigt die dynamoelektrische rotatorische Maschine 23, aufweisend einen Rotor 21 mit einer Welle 25 und einem Rotorpaket 24 sowie einen Stator 22. FIG 9 zeigt ein Verfahren zur Herstellung des Rotors 21.

In einem Verfahrensschritt S1 erfolgt ein Bereitstellen des Rotorpakets.

Ein Einfügen von Käfigstäben in die axial verlaufenden Öffnungen des Rotorpakets erfolgt in einem Verfahrensschritt S2.

In einem Verfahrensschritt S3 erfolgt ein Anbringen wenigstens einer Kurzschlussringscheibe 4, ...,45 auf aus dem Rotorpaket herausragende Käfigstäbe 3.

In einem Verfahrensschritt S4 erfolgt ein stoffschlüssiges Verbinden, insbesondere mittels Schweißens, der Kurzschlussringe mit den Käfigstäben.

Alternativ kann in einem Verfahrensschritt S5 ein Anbringen wenigstens einer weiteren Kurzschlussringscheibe 4, ...,45, erfolgen.

Ein stoffschlüssiges Verbinden, insbesondere mittels Schweißens der Kurzschlussringscheiben 4, ...,45 miteinander und mit den Käfigstäben 3 gelingt in einem Verfahrensschritt S6.

Vorteilhaft ist hierbei Laser-Schweißen und/oder Elektronenstrahl-Schweißen. Auch andere Verbindungsarten, insbesondere andere Schweißarten, sind denkbar.

## Patentansprüche

1. Rotor (21) für eine dynamoelektrische rotatorische Maschine (23), insbesondere Asynchronmaschine, mit einem Rotorpaket (24) und einem Kurzschlusskäfig, wobei der Kurzschlusskäfig eine Mehrzahl an elektrisch leitfähigen Käfigstäben (3) und elektrisch leitfähigen Kurzschlussringen (2) aufweist,
wobei die Käfigstäbe (3) in Nuten des Rotorpakets (24) angeordnet sind,
wobei die Käfigstäbe (3) mit wenigstens einen Kurzschlussring (2) verbunden sind,
wobei die Käfigstäbe (3) einen ausgeklinkten Bereich (311) aufweisen.

2. Rotor (21) nach Anspruch 1, wobei der ausgeklinkte Bereich (311) in einer Öffnung (11) des Kurzschlussrings (2) liegt.

3. Rotor (21) nach einem der vorhergehenden Ansprüche,
wobei ein Übergang (310) vom ausgeklinkten Bereich (311) zu einem anderen Bereich (312) des Käfigstabs (3) eine Rundung aufweist.

4. Rotor (21) nach Anspruch 3,
wobei ein Übergang (310) vom ausgeklinkten Bereich (311) zum anderen Bereich (312) bogenförmig oder kreissegmentförmig ist.

5. Rotor (21) nach einem der vorhergehenden Ansprüche,
wobei ein Ende des ausgeklinkten Bereichs (311) in einer Ebene mit einem Ende des Kurzschlussrings (2) liegt.

6. Rotor (21) nach einem der vorhergehenden Ansprüche 3 bis 5,
wobei der Übergang (310) im Bereich des Rotorpakets (24) liegt.

7. Verfahren zur Herstellung eines Rotors (21) nach einem der Ansprüche 1 bis 6, mit folgenden Schritten:
- Bereitstellen des Rotorpakets (24),
- Einfügen von Käfigstäben (3) in die axial verlaufenden Öffnungen des Rotorpakets (24),
- Anbringen wenigstens einer Kurzschlussringscheibe (4, ...,45) auf aus dem Rotorpaket (24) herausragende Käfigstäbe,
- stoffschlüssiges Verbinden, insbesondere mittels Schweißens, der Kurzschlussringscheibe (4, ...,45) mit den Käfigstäben
oder
- Anbringen, wenigstens einer weiteren Kurzschlussringscheibe (4, ...,45) und stoffschlüssiges Verbinden, insbesondere mittels Schweißens, der Kurzschlussringscheibe (4, ...,45) miteinander und mit den Käfigstäben.

8. Käfigstab für einen Rotor nach einem der Ansprüche 1 bis 7.

9. Dynamoelektrische rotatorische Maschine (23), aufweisend einen Rotor (21) nach einem der Ansprüche 1 bis 7.
